# NEUE EUROPÄISCHE PATENTSCHRIFT

(11) **EP 1 949 613 B2**
(45) Veröffentlichungstag und Bekanntmachung des Hinweises auf die Entscheidung über den Einspruch: **21.03.2018**
(45) Hinweis auf die Patenterteilung: 19.10.2011
(21) Anmeldenummer: 06807820.3
(22) Anmeldetag: 15.11.2006
(51) Int. Cl.: H04L 12/40, G05B 15/02

(54) **Elektrogeräteanordnung für ein Möbel mit einer Buseinrichtung und Busteilnehmern**
Electrical device arrangement for an item of furniture having a bus device and bus subscribers
Agencement d'appareils électriques pour meuble avec dispositif de bus et abonnés de bus

(30) Priorität: 15.11.2005 DE 102005054845
(43) Veröffentlichungstag der Anmeldung: 30.07.2008
(73) Patentinhaber: Dewert Antriebs- und Systemtechnik GmbH, 32278 Kirchlengern (DE)
(72) Erfinder: LANGEJÜRGEN, Stefan, 32602 Vlotho (DE)
(74) Vertreter: Dantz, Jan Henning
(86) Internationale Anmeldenummer: PCT/EP2006/068517
(87) Internationale Veröffentlichungsnummer: WO 2007/057420

(56) Entgegenhaltungen:
- SVEN LINNMAN: "M3S: The Local Network for Electric Wheelchairs and Rehabilitation Equipment" IEEE TRANSACTIONS ON REHABILITATION ENGINEERING, IEEE INC. NEW YORK, US, Bd. 4, Nr. 3, September 1996 (1996-09), XP011053803 ISSN: 1063-6528

## Beschreibung

Die Erfindung betrifft eine Elektrogeräteanordnung, insbesondere für ein Möbel, mit einer Buseinrichtung und Busteilnehmern.

Derartige Elektroanordnungen sind in der Form von unterschiedlichen elektromotorischen Antriebskonfigurationen zur Verstellung von Möbeln im Zusammenhang mit weiteren elektrischen Verbrauchern bekannt, wie beispielsweise Lampen, Heizungen, Massagegeräte und dergleichen. Diese Geräte sind auf Grund der verschiedenen Möbelkonstruktionen entsprechend angepasst und von großer Vielfalt. Dementsprechend umfangreich sind auch die zugehörigen Steuerungen mit Stromversorgungen, Bedienungsgeräten und mannigfaltigen Anschlussausführungen der zusammenzuschaltenden Einrichtungen.

Unterschiedliche Standardisierungsmaßnahmen sind bekannt, welche die Vielzahl von Anschlusstypen einerseits reduzieren und andererseits eine Möglichkeit schaffen, Elektrogeräteanordnungen flexibler zu gestalten, so zum Beispiel Nachrüstung und einfacher Zusammenbau.

Als ein Beispiel zur Illustration sei die DE 201 07 726 U1 genannt, welche eine Einrichtung zur Steuerung von elektrischen Einrichtungen von Möbeln in einer Modulbauweise beschreibt, wobei die Module zusammensteckbar sind und Datenübertragungsleitungen und Stromversorgungsleitungen besitzen. Die Datenübertragungsleitungen bilden ein Bussystem, an das in den einzelnen Modulen Datenverarbeitungseinrichtungen angeschlossen sind. Weiterhin enthalten die Module Steuerschaltungen für Verbraucher, an mindestens ein Modul ist ein Bediengerät anschließbar, bzw. ein Modul enthält einen Fernsteuerempfänger.

Das Dokument "M3S: The local Network for Electric Wheelchairs and Rehabilitation Equipment" offenbart eine Elektrogeräteanordnung mit einer Buseinrichtung und Busteilnehmern, wobei die Buseinrichtung zumindest zwei Steuerpfade, zwei Leistungspfade und mindestens einen Freigabepfad aufweist.

Es besteht der Bedarf, solche Anordnungen weiter zu vereinfachen und noch flexibler hinsichtlich des Anschließens und Steuerns weiterer Geräte zu gestalten.

Weiterhin besteht der Bedarf, derartige Elektrogeräteanordnungen auch bei Möbeln in Bereichen einzusetzen, für die besondere Sicherheitsvorschriften gelten, wie zum Beispiel im Pflege- und Hospitalbereich.

Die Aufgabe der vorliegenden Erfindung besteht darin, eine Elektrogeräteanordnung, insbesondere für Möbel mit einer Buseinrichtung und Busteilnehmern zu verbessern und gegenüber dem Stand der Technik weitere Vorteile hinsichtlich Wirtschaftlichkeit und Sicherheit zu schaffen.

Erfindungsgemäß wird diese Aufgabe durch eine Elektrogeräteanordnung mit den Merkmalen des Anspruchs 1 gelöst.

Vorteilhafte Ausgestaltungen und Weiterbildungen der Erfindung sind Gegenstand der Unteransprüche.

Eine der Erfindung zugrunde liegende Idee besteht darin, dass alle über eine Buseinrichtung verbundenen Busteilnehmer zusätzlich zu den Busleitungen mit einer Freigabeleitung verbunden sind und sich alle nach den Vorgaben eines Busteilnehmers richten, der als Master fungiert und in welchem neben einem Ablaufprogramm auch noch die Steuerungsparameter abgespeichert sind. Dabei können sich die Busteilnehmer untereinander gegenseitig erkennen, vollautomatisch adressieren und miteinander kommunizieren.

Die Elektrogeräteanordnung, insbesondere für ein Möbel, mit einer Buseinrichtung und Busteilnehmern weist zumindest zwei Steuerpfade, zwei Leistungspfade und mindestens einen Freigabepfad auf.

Durch den zusätzlichen Freigabepfad wird die Erkennung der Busteilnehmer untereinander vorteilhaft vereinfacht. Gleichzeitig schafft bzw. vereinfacht der Freigabepfad die Möglichkeit der so genannten Erstfehlersicherheit, den bestimmte Sicherheitsnormen fordern. Dadurch wird ein großer Einsatzbereich geschaffen. Ein noch weiterer Vorteil des Freigabepfades besteht darin, dass die auf ihm geführten Signale beispielsweise zur Schaltung einer Netzfreischaltung und eines Schlafinodus dienen und somit einen geringen Energieverbrauch bei Nichtbenutzung ermöglichen.

In einer ersten Ausführungsform ist noch vorgesehen, dass die Buseinrichtung mit mindestens einem Daisy-Chain-Pfad in Form einer Leitung ausgestattet ist. Dadurch wird die Erkennung der Busteilnehmer untereinander noch zusätzlich in vorteilhafter Weise vereinfacht. Es ist dann noch weiterhin vorgesehen, dass der Freigabepfad und der Daisy-Chain-Pfad zusammengefügt sind. Dabei wird dieser gemeinsame Pfad mit mehreren Signalen beaufschlagt, so dass der gemeinsame Pfad ein erstes Signal für die Daisy-Chain-Verkettung und mindestens ein weiteres Signal in Form eines Freigabesignals aufweist. Dabei ist es von Vorteil, dass die Form und/oder die Größe der Signale unterschiedlich sein können. Ein erstes Signal für die Daisy-Chain-Verkettung könnte beispielsweise durch ein kodiertes Signal gebildet sein, während das mindestens eine Freigabesignal durch mindestens ein Signal mit einer konstanten Spannung gebildet ist, wobei die einzelnen Spannungssignale unterschiedliche Amplituden aufweisen können.

Es ist in bevorzugter Ausführung vorgesehen, dass jeder Busteilnehmer zumindest eine Steuereinheit, eine Basis-Steuereinheit, eine Speichereinheit und eine Ausgabeeinheit und/oder eine Eingabeeinheit aufweist. Hiermit ist es möglich, alle Busteilnehmer vorteilhaft wirtschaftlich mit der gleichen Software auszustatten. Zum Beispiel wird dadurch die Synchronisation von Busteilnehmern oder von Antrieben, die als Antriebe oder als Steuerungen der Antriebe ausgebildet sind, wesentlich vereinfacht.

Ein weiterer Vorteil der Basis-Steuereinheit besteht darin, dass diese besonders fehlerresistent ist und einen vorteilhaft überschaubaren Aufbau bildet.

Es ist weiterhin bevorzugt, dass die Basis-Steuereinheit und/oder die Steuereinheit direkt mit der Buseinrichtung verbunden ist. Die Basis-Steuereinheit dient bei Inbetriebnahme oder bei einem Reset oder Upgrade zum Start eines in der Steuereinheit ablaufenden Programms, welches in der Speichereinheit vorher festlegbar, aber auch vorteilhaft veränderbar abgespeichert ist.

Es ist vorgesehen, dass der Busteilnehmer, der eine Bedienungsemheit bildet, den Freigabepfad mit Signalen beaufschlagt, so dass durch den Freigabepfad eine Auswahl von Busteilnehmern oder einzelne Gruppen von Busteilnehmern in deren jeweiligen Betriebszustand beeinflussbar sind.

Dazu ist vorgesehen, dass die Freigabeleitung mit einem logischen, kodierten oder periodischen Signal zur Freigabe beaufschlagt ist, wodurch sich eine vielfältige Beeinflussung der Busteilnehmer vorteilhaft einfach gestaltet.

**Dadurch dass** jeweilige Signal des mindestens einen Freigabepfades der Betriebszustand des jeweiligen Busteilnehmers zwischen einem aktiven und einem passiven und/oder gegebenenfalls auch auf einen energiesparenden Betriebszustand schaltbar ist, wird die mögliche Auswahl erhöht. Es ist ferner noch zweckmäßig, wenn durch das jeweilige Signal des mindestens einen Freigabepfades die Spannungsversorgung von Schaltorganen, beispielsweise von Relais, Mikroprozessoren oder Steuereinheiten der einzelnen Busteilnehmer sicherstellbar ist. Dadurch werden die Anforderungen der Erstfehlersicherheit erhöht bzw. erfüllt.

Es ist weiterhin bevorzugt, dass die Buseinrichtung als eine RS 485 Schnittstelle mit einem zusätzlichen Freigabepfad ausgebildet ist, wodurch eine Einrichtung mit hoher Qualität und hohem Standard verwendet wird, bei der eine vorteilhaft störfeste Datenübertragung gewährleistet ist. Mit der RS 485 Schnittstelle ist eine Datenübertragung im Halbduplex-Verfahren möglich, das vorzugsweise auf einem sogenannten Master und Slave System aufbaut.

In einer alternativen Ausgestaltung ist die Buseinrichtung als ein CAN-Bus mit mindestens einem zusätzlichen Freigabepfad ausgebildet.

In einer weiteren alternativen Ausführung ist vorgesehen, dass die Steuerpfade der Buseinrichtung drahtlos ausgebildet sind, wobei diese drahtlose Ausbildung der Steuerpfade eine WLAN-, DECT- oder Bluetooth-Einrichtung ist.

In einer weiteren Alternative dazu ist der Freigabepfad Bestandteil der Steuerpfade der Buseinrichtung. Durch diese Möglichkeiten ist der Einsatzbereich der Erfindung vorteilhaft erweitert.

In einer anderen Ausführungsform ist neben dem Freigabepfad noch ein weiterer Pfad angeordnet, welcher Signale zur Erkennung der Busteilnehmer untereinander aufweist.

Es ist eine Daisy-Chain-Verkettung gebildet. Der Anfang der Verkettung ist durch eine vorbestimmte Einheit beispielsweise durch die Versorgungseinheit gebildet, an dessen Ausgang immer das Verkettungssignal gesetzt ist. Jeder Busteilnehmer vergleicht zwischen seinem Eingang und Ausgang das Verkettungssignal. Liegt das Signal nur am Eingang an, so hält dieser Busteilnehmer Rücksprache mit einem anderen Busteilnehmer, vorzugsweise mit dem Master, der als Bedienungseinheit ausgebildet sein kann. Der Master weist diesem Busteilnehmer nun eine Adresse zu, welche beiderseits gespeichert wird. Abschließend setzt dieser Busteilnehmer das Verkettungssignal an seinem Ausgang, was bereits ein weiterer Busteilnehmer an seinem Eingang abfragt, um sodann mit dem Master zu kommunizieren und von ihm eine Adresse zugewiesen zu bekommen.

Bei der bevorzugten Ausführungsform weist jede Bedieneinheit eine gewisse Intelligenz auf, während alle anderen Busteilnehmer vorzugsweise eine standardisierte Intelligenz beinhalten. Somit sind alle Steuerungsparameter und die Steuerungsprogramme und alle erforderlichen Daten auf einem Speicherbaustein der Bedienungseinheiten abgelegt. Die Buseinrichtung teilt sich somit in befehlsgebende Busteilnehmer und in ausführende Befehlsteilnehmer. Dies bietet den Vorteil, dass alle Busteilnehmer die gleichen Programme beinhalten, jedoch die Bedienungseinheiten zusätzlich die zur Steuerung der Buseinrichtung erforderlichen Programmeinheiten. Bei einem Wechsel des Steuerungsprogramms oder bei einer Programmierung bietet dies den Vorteil des geringsten Auf wandes. Ferner kann die Buseinrichtung nachträglich durch weitere Busteilnehmer ergänzt werden, ohne dass ein gesondertes Programm geschrieben werden muß.

In einer weiteren bevorzugten Ausführung ist vorgesehen, dass die Elektrogeräteanordnung mittels Datenpaketen steuerbar ist, welche über die Buseinrichtung übertragen werden, wobei die Datenpakete zumindest die Adresse eines Busteilnehmers als ein Adressbyte, ein Befehlsbyte und eine Prüfbyte aufweisen. Dabei können die Datenpakete mindestens ein Datenbyte aufweisen.

In einer bevorzugten Ausführungsform gliedert sich das Adressbyte in mehrere Teile. Dabei können beispielsweise die ersten vier Bit Informationen über die Adressierung und weitere Bit Informationen über die Länge eines Datensatzes beinhalten. Bei einer Verwendung einer Vier-Bit-Information für die Adressenvergabe können bis zu 16 Busteilnehmer an einer Buseinrichtung angeordnet sein. Als weiteres folgt ein Befehlsbyte, welches Informationen zur Ansteuerung eines Verbrauchers oder eines Busteilnehmers beinhalten. Weiterhin können bei Bedarf zusätzliche Datenbytes folgen, welche Informationen beispielsweise für Updates oder zur Programmierung beinhalten. Als letztes folgt ein Prüfbyte, welches eine Checksumme des gesamten Datensatzes beinhaltet. Auf diese Art und Weise können Datensätze realisiert werden, dessen Länge sich variabel gestalten, im Normalfall jedoch aus Adressbyte, Befehlsbyte und Prüfbyte bestehen. Da die Datensätze sehr kurz ausgebildet sind, wird somit in vorteilhafter Weise der Datentransfer auf ein Minimum reduziert, was sich in einem hohen Maß an Zuverlässigkeit und Schnelligkeit bemerkbar macht.

In besonders bevorzugter Ausgestaltung ist vorgesehen, dass der Busteilnehmer, der als Bedienungseinheit einen Master bildet, in seiner Speichereinheit einen dazu geeigneten Programmabschnitt aufweist, welcher die Steuersoftware des Masters bildet. Durch eine solche Masterbildung wird es vorteilhaft ermöglicht, dass weitere Bedienungseinheiten, zum Beispiel bei Pflegebetten als Patientenbedienungen eingesetzt werden können. Weiterhin wird damit eine Ressourcenaufteilung der Prozessoren in der Geräteanordnung geschaffen, die vorteilhaft einfach und überschaubar ist.

Vorzugsweise sind die Steuereinheiten aller Busteilnehmer bis auf die Steuereinheit des Busteilnehmers, der als Bedienungseinheit einen Master bildet, bei Nichtbenutzung der Elektrogeräteanordnung elektrisch nicht versorgt oder nicht aktiv. Dieses bildet einen Vorteil in Bezug auf den Energieverbrauch der erfindungsgemäßen Anordnung bei Nichtbenutzung, da derartige Geräteanordnungen in der meisten Zeit in dem Zustand der Nichtbenutzung verbleiben. In einer anderen Ausführungsform sind nur Teile der einzelnen Busteilnehmer aktiv, so dass beispielsweise zum Betrieb mit einem Akkumulator ein stromsparender Schlafmodus realisiert ist.

Nachfolgend wird die Erfindung anhand der in den schematischen Figuren der Zeichnung angegebenen Ausführungsbeispiele näher erläutert. Es zeigt dabei:
- Figur 1: ein Blockschaltbild eines ersten Ausführungsbeispiels der erfindungsgemäßen Anordnung;
- Figur 2: ein Blockschaltbild eines Ausführungsbeispiels eines Busteilnehmers;
- Figur 3: ein Ausführungsbeispiel von Datenpaketen; und
- Figur 4: ein Blockschaltbild eines zweiten Ausführungsbeispiels der erfindungsgemäßen Anordnung

Gleiche Bezugszeichen in den Figuren bezeichnen gleiche oder ähnliche Bauteile mit gleicher oder ähnlicher Funktion.

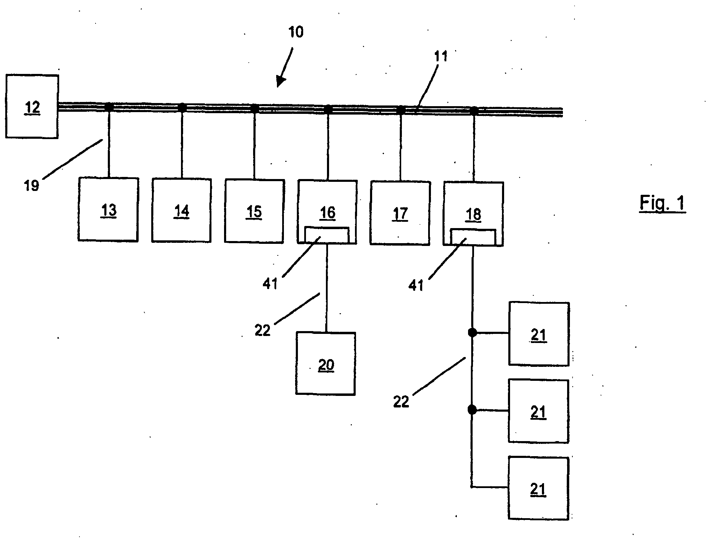

Fig. 1 zeigt ein Blockschaltbild eines ersten Ausführungsbeispiels der erfmdungsgemäßen Geräteanordnung 10.

Die Geräteanordnung 10 besitzt eine Buseinrichtung 11, welche als eine RS 485-Schnittstelle mit einem Datenpfad bestehend aus zwei Steuerpfaden ausgelegt ist. Weiterhin weist die Buseinrichtung 11 mindestens zwei Versorgungspfade auf, die von einer Versorgungseinheit 12 mit elektrischer Energie beaufschlagt werden. Die Versorgungseinheit 12 befindet sich am Anfang der Buseinrichtung 11.
Die Buseinrichtung 11 besitzt außerdem einen Freigabepfad.

An die Buseinrichtung 11 sind an beliebiger Stelle Busteilnehmer 13...18 angeschlossen, indem sie mit den Datenpfaden, den Versorgungspfaden und dem Freigabepfad verbunden sind. Auch die Versorgungseinheit 12 bildet einen Busteilnehmer.

In dem in Fig. 1 dargestellten Beispiel sind folgende Busteilnehmers 13...18 dargestellt: eine PC-Einheit 13, eine erste Bedienungseinheit 14, ein Verbraucher 15, eine erste Steuerung 16, eine zweite Bedienungseinheit 17 und eine zweite Steuerung 18.

Diese Geräteanordnung 10 ist nur beispielhaft gezeigt und kann zum Beispiel eine elektrische Geräteanordnung an einem Pflegebett sein, das nicht dargestellt ist.

Die PC-Einheit 13 ist hier ein Personalcomputer, mit welchem Daten in die Datenpfade der Buseinrichtung 11 eingespeist werden, um zum Beispiel bei Inbetriebnahme oder Wartung der Geräteanordnung 10 eine erstmalige Speicherung von Daten zur Anpassung der elektrischen Geräte in Speichereinheiten der Busteilnehmer vorzunehmen. Dazu gehören zum Beispiel unter anderem auch Tabellen über Hubwege der Antriebe usw. Darüber hinaus kann mit der PC-Einheit 13 oder mit einem tragbaren Programmiergerät die Programme einzelner oder aller Busteilnehmer 13...18 geändert, erneuert oder ausgetauscht werden.

Die erste Bedienungseinheit 14 ist ein Handschalter, mit welchem sämtliche Funktionen der elektrischen Geräteanordnung 10 gesteuert werden. Er besitzt Ein- und Ausgabefunktionen, die später noch erläutert werden. Weiterhin ist in ihm das Steuerprogramm für die Geräteanordnung vorgesehen. Der Verbraucher 15 ist in diesem Beispiel eine Lampe.

Die erste Steuerung 16 ist für einen ersten Antrieb 20 vorgesehen, welcher zum Beispiel ein Doppelantrieb zur Verstellung eines Lattenrostes des Pflegebetts ist. Die Steuerung weist unter anderem eine Leistungseinheit 41 auf, die mit dem ersten Antrieb 20 verbunden ist. Ihre Funktion wird später noch erläutert.

Eine zweite Bedienungseinheit 17 ist ein so genannter Patientenhandschalter mit eingeschränkter Funktionsweise, das heißt, der in dem Pflegebett befindliche Patient kann nur die für ihn zugelassenen Funktionen der elektrischen Geräteanordnung 10 des Pflegebetts bedienen, zum Beispiel nur die Verstellung des Kopfteils.

Durch Umstecken der zweiten Bedienungseinheit 17 oder Umprogrammieren derselben durch die PC-Einheit 13 lässt sich eine vorteilhaft einfache Anpassung an den jeweiligen Patienten ermöglichen. Durch Weglassen dieser zweiten Bedienungseinheit 17 ist die Geräteanordnung 10 selbstverständlich auch für andere Möbel vorteilhaft einfach zu verwenden.

Die zweite Steuerung 18 besitzt ebenfalls eine Leistungseinheit 41, die mit zweiten Antrieben 21 verbunden ist, welche hier im Ausführungsbeispiel Einzelantriebe zur Höhenverstellung des Bettes sind, die nicht näher erläutert werden.

Auch die Versorgungseinheit 12 ist ein Busteilnehmer.

Über die Buseinrichtung 11 ist eine Synchronisation zum Beispiel der Antriebe 20, 21 möglich.

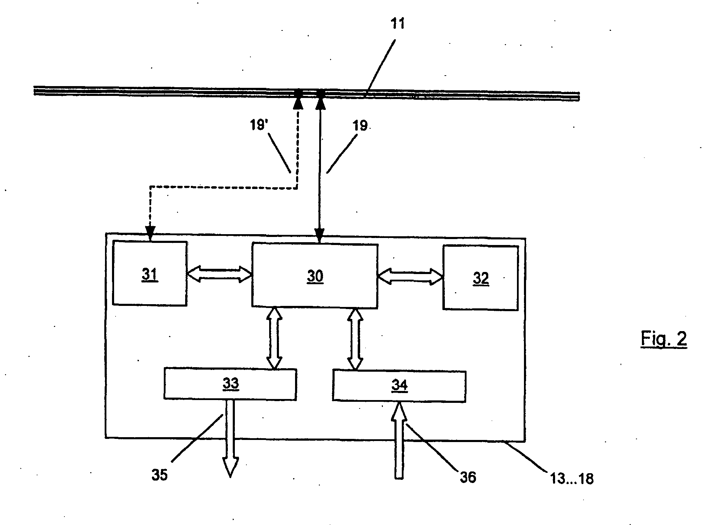

Jeder Busteilnehmer 12...18 ist mit einer Prozessorsteuerung ausgerüstet, wie im Zusammenhang mit der Fig. 2 im Folgenden näher beschrieben wird.

Fig. 2 zeigt dazu ein Blockschaltbild eines Ausführungsbeispiels eines Busteilnehmers 13...18.

Der Busteilnehmer 13...18 weist Folgendes auf: eine Steuereinheit 30, vorzugsweise mit einem Prozessor, eine Basis-Steuereinheit 31, eine Speichereinheit 32, eine Ausgabeeinheit 33 mit Ausgängen 35 und eine Eingabeeinheit 34 mit Eingängen 36.

Die Steuereinheit 30 ist mit der Buseinrichtung 11 verbunden, das heißt mit den Daten- und Leistungspfaden sowie mit dem Freigabepfad. In einer anderen Ausführung ist die Basis-Steuereinheit 31 mit der Buseinrichtung 11 direkt verbunden. Die Steuereinheit 30 steht weiterhin mit der Basis-Steuereinrichtung 31, der Speichereinrichtung 32 und den Einrichtungen zur Ausgabe 35 und Eingabe 34 in Verbindung.

In dem Fall, in dem der Busteilnehmer eine Steuerung eines Antriebs 20, 21 ist, ist die Ausgabeeinheit 33 als Leistungseinheit 41 mit einem Ausgang 35 zum Anschluss an den jeweiligen Antrieb 20, 21 ausgebildet, was nicht weiter erläutert wird. Die Eingabeeinheit 34 dient hierbei zum Empfang von Steuersignalen von Messgebern des Antriebs 20, 21, beispielsweise zur Positionserfassung.

Ist der Busteilnehmer eine Bedienungseinheit 14, 17, so ist die Eingabeeinheit 34 mit einer Tastatur verbunden. Diese Tastatur kann auch ein Touchscreen oder ähnliches sein. Die Ausgabeeinheit 33 ist beispielsweise zum Anschluss an einen Anzeigeschirm oder an Kontrollleuchten ausgebildet.

Die Speichereinheit 32 beinhaltet vorher festgelegte Datenwerte, einzeln und in Tabellenform, die auch nachträglich noch durch die PC-Einheit 13 oder bei Betrieb automatisch veränderbar sind. Die festgelegten Datenwerte sind Identitätsinformationen und Angaben zur Leistungsfähigkeit bzw. Funktion des jeweiligen Busteilnehmers.

Im Falle der ersten Bedienungseinheit 14 beinhaltet die Speichereinheit 32 das Steuerprogramm für die Geräteanordnung 10.

Bei einer Inbetriebnahme der Geräteanordnung 10, bzw. Wartung, Reset, Neustart übernimmt die Basis-Steuereinheit 31 den Start des in der Speichereinheit 32 eines jeden Busteilnehmers 12...18 befindlichen Programms. Sie organisiert Updates/Upgrades der Steuersoftware/des Betriebssystems des jeweiligen Busteilnehmers 12...18. Sie wird auch als BIOS bezeichnet, was Basic Input/Output System bedeutet.

In einer anderen Ausführungsform beinhaltet jede Bedienungseinheit 14, 17 eine Speichereinheit 32 und ein Steuerungsprogramm für die Geräteanordnung 10.

Die Steuereinheit 30 überprüft die Datenpfade nach einem Datensatz, der für ihn bestimmt ist, das heißt die Adresse des Busteilnehmers, in dem sich die Steuereinheit 30 befindet. Bei Erhalt eines solchen Datensatzes (wird später erläutert) wird der in ihm übertragene Steuerbefehl, zum Beispiel "Einschalten Lampe" ausgeführt. Bei den Antrieben überwacht die Steuereinheit 30 die Ist-Position des Antriebs und sendet gegebenenfalls Daten darüber mittels der Datenpfade der Buseinrichtung 11 an seinen Befehlsgeber, hier die erste Bedienungseinheit 14, zurück, wobei der Befehlsgeber diese Ist-Position mit Soll-Vergleichswerten der Geräteanordnung vergleicht und den Antrieb durch weitere Steuerbefehle weiterfahren lässt oder abschaltet.

Der jeweilige Busteilnehmer 12...18 kann diese Steuerbefehle jedoch nur ausführen, wenn er über den Freigabepfad freigeschaltet ist. Dazu wird von der ersten Bedienungseinheit 14 der Freigabepfad beispielsweise bei Tastendruck mit einem Signal beaufschlagt, das entweder alle Busteilnehmer 12...18 oder selektiv nur bestimmte freischaltet. Dieses kann durch ein logisches, kodiertes oder periodisches Signal oder durch ein Schaltsignal bzw. ein bestimmtes Potenzial erfolgen. Dabei kann eine Überwachung dieses Signals ausgeführt werden, wodurch beispielsweise auch Kabelbrüche erkannt werden können.

In Weiterführung dieser Ausführungsform können mehrere Freigabepfade vorhanden sein, welche einzelnen Gruppen von Busteilnehmern 13...18 zugeordnet sein können. Dabei können die Freigabepfade ausschließlich in der Buseinrichtung 10 integriert sein oder zusätzlich über einen eigenen Pfad zu den einzelnen Busteilnehmern 13...18 geführt sein.

Eine weitere vorteilhafte Ausführungsform sieht vor, dass die Freigabeleitung die Spannungsversorgung von Schaltorganen beispielsweise von Relais, Mikroprozessoren oder Steuereinheiten 30 der einzelnen Busteilnehmer 13...18 sicher stellt. Eine Weiterbildung dieser Ausführungsform sieht eine Bedienungseinheit vor, welche von der Bedienungseinheit 14 räumlich getrennt z.B. in Form einer Schalttafel am Rahmen eines Bettes angeordnet ist und Schalter beinhaltet, welche das Signal der Freigabeleitung schalten.

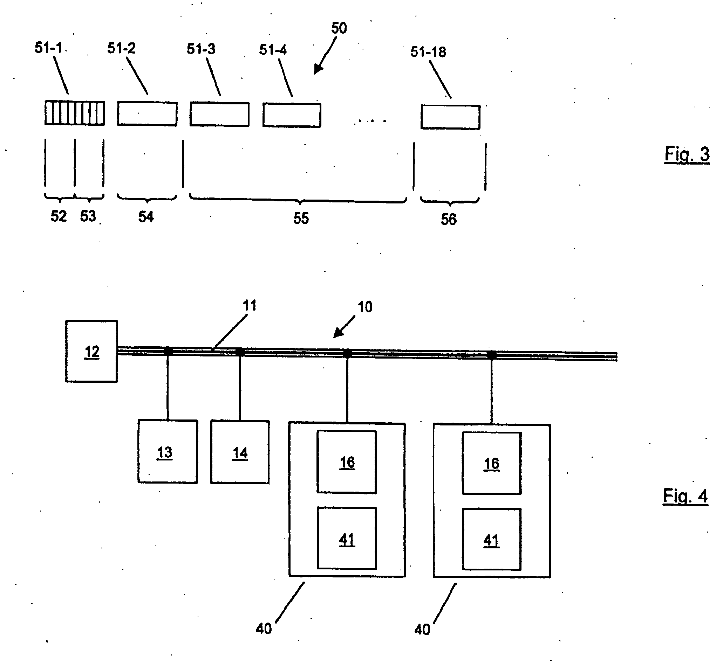

Bei Tastendruck der ersten Bedienungseinheit 14 wird ein Datenpaket 50 auf die Datenpfade der Buseinrichtung 11 aufgebracht, welches in Fig. 3 dargestellt ist. Dabei kann die erste Bedienungseinheit 14 dadurch definiert sein, dass sie als erster Teilnehmer an der Buseinrichtung 10 in Betrieb genommen wird und somit den master bildet.

Das Datenpaket 50 besteht in diesem Ausführungsbeispiel aus Bytes 51-1 bis 51-18: einem Adressbyte 52 mit Byteanzahl 53, einem Steuerbyte 54, Datenbytes 55 und einem Prüfbyte 56.

Je nach Art des gesendeten Datenpakets 50 werden mindestens drei Bytes 52 und 53, 54 und 56 übertragen. In diesem Ausführungsbeispiel besteht das Adressbyte 52 aus vier Bit, daraus ergibt sich eine maximale Anzahl von 16 Busteilnehmern. In weiterer Ausgestaltung des gezeigten Beispiels kann jedes Byte aus einzelnen Bits oder mehreren Bytes bestehen, um somit eine individuelle Anpassung der Buseinrichtung realisieren zu können.

Das Adressbyte 52 führt die Adresse des adressierten Busteilnehmers, die Byteanzahl gibt die Anzahl der Bytes 51-1 bis 15-18 des Datenpakets 50 an, das Steuerbyte 54 führt den kodierten Steuerbefehl für den jeweilig adressierten Busteilnehmer, die Datenbytes 55 enthalten zu übertragende Datenwerte und das Prüfbyte 56 dient zur Prüfung des Datenpakets 50, was durch eine Checksumme gebildet sein kann, nicht weiter erläutert wird. Es sei noch angemerkt, dass gemäß des Ausführungsbeispiels die Länge des die Datenbytes 55 aus den Bytes 51-3 bis 51-17 gebildet ist und somit nur beispielhaft 15 Bytes lang ist. Die Länge des Datenbytes richtet sich nach der Menge der zu übertragenden Daten, die beispielsweise bei einem Update erforderlich sind.

Im Folgenden wird die Inbetriebnahme und Initialisierung der Geräteanordnung beschrieben.

In dem hier gezeigten Beispiel werden Busteilnehmer mit gleichen Eigenschaften verwendet, was eine hohe Flexibilität bedeutet. Diese besitzen zur Identifikation unterschiedliche Adressen. Zur Vermeidung von Kodierschaltern in den Busteilnehmern wird ein Daisy-Chain-Pfad benutzt.

Die Vergabe von Adressen erfolgt bei jedem Tastendruck bzw. Setzen des Freigabepfades. Dies hat den Vorteil, dass das ganze System auf volle Funktionsfähigkeit geprüft wird und ein Hinzufügen oder Entfernen von Busteilnehmern automatisch erkannt wird. Die Buseinrichtung 11 besteht vorzugsweise aus einer RS485-Schnittstelle mit dem zusätzlichen Freigabepfad, der zur Signalisierung dient, dass ein Master die Buseinrichtung 11 belegt hat. Dieser Pfad kann auch für eine Netzfreischaltung genutzt werden. Dabei kann der Master eine Batterie-/Akkuversorgung aufweisen. Weiterhin wird mit dem Freigabepfad eine Beeinflussung des Betriebszustands eines jeweiligen Busteilnehmers erzielt.

Weiterhin besitzt die Buseinrichtung 11 einen Daisy-Chain-Pfad.

Die Versorgungseinheit 12 ist immer am Anfang der Buseinrichtung 11 angeordnet und setzt den Daisy-Chain-Pfad auf einen bestimmten Wert.

Beim Tastendruck wird geprüft, ob der Freigabepfad ein bestimmtes Signal oder Potenzial führt. Ist dieses nicht vorhanden, wird der Busteilnehmer mit der gedrückten Taste der Master. Ist schon ein Master vorhanden, signalisiert dies der Freigabepfad. Dann wartet der Busteilnehmer ab, bis der vorhandene Master ihn unter seiner Busadresse anspricht. Der Busteilnehmer speichert alle Adressen mit der Zuweisung aller Busteilnehmer.

Ist der Busteilnehmer der Master, so setzt er den Freigabepfad auf ein bestimmtes Signal, wodurch alle Busteilnehmer eine Initialisierung durchführen. Der Daisy-Chain-Pfad wird auf einen bestimmten Wert gesetzt.

Innerhalb einer bestimmten Zeit müssen alle Busteilnehmer betriebsbereit sein, zum Beispiel 10 ms.

Der Busteilnehmer, der direkt nach der Versorgungseinheit angeschlossen ist, hat an seinem Daisy-Chain-Eingang den bestimmten Datenwert der Versorgungseinheit 12. Dieser Busteilnehmer reagiert auf die Adresse und antwortet mit seiner Identität und speichert die Adresse, mit der er angesprochen wurde. Eine Ausnahme besteht, wenn der Master dieser Busteilnehmer ist, dann weist er sich selbst die Adresse zu und sendet seine Identität auf die Buseinrichtung 11 und fragt nach dem nächsten Busteilnehmer. So werden allen Busteilnehmer erfasst und der Master beendet die Initialisierung nach Erhalt der letzten Antwort nach einem bestimmten Zeitabschnitt von zum Beispiel 10 ms oder wenn nach einer vorgegebenen Zeitspanne keine Antwort mehr kommt.

Die Erfindung ist nicht auf das oben Beschriebene beschränkt, sondern auf vielfältige Art und Weise modifizierbar.

So kann zum Beispiel, wie Fig. 4 in einem zweiten Ausführungsbeispiel der erfindungsgemäßen Geräteanordnung 10 zeigt, eine elektromotorischer Antriebseinheit 40 als ein Busteilnehmer ausgebildet sein und die Steuerung 16 mit der Leistungseinheit 41 auf weisen.

Die Buseinrichtung 11 kann zum Beispiel als Daisy-Chain-Verkettung ausgebildet sein. Ferner kann die Buseinrichtung 11 nach Art eines CAN-Bus aufgebaut sein.

Der Freigabepfad kann zur so genannten Erstfehlersicherheit dienen, indem eine Taste der Master-Bedienungseinheit 14 den Freigabepfad direkt schaltet. In dem Fall, in dem keine Erstfehlersicherheit gefordert wird, kann dazu eine Logik bzw. der Prozessor des Masters den Freigabepfad schalten.

Der Freigabepfad kann eine Netzfreischaltung in der Versorgungseinheit 12 bzw. als weiteren Busteilnehmer schalten. Es ist auch möglich, dass der Freigabepfad die Busteilnehmer zwischen einem Betriebs- und einem Nichtbetriebsmodus zur Energieeinsparung umschaltet.

Ferner kann der Freigabepfad auf die Steuereinheit 30 oder den Ausgang 35 derart einwirken, dass beim Fehlen des Freigabesignals der Ausgang 35 nicht geschaltet wird, um beispielsweise ein unbeabsichtigtes Anlaufen beispielsweise eines Motors eines Antriebs oder eines Einschalten eines Verbrauchers 15, 20, 21, 40 zu verhindern. Ferner kann die Steuereinheit 30 jedes Busteilnehmers 13...18 nach einer vorgegebenen Zeitspanne, nach welcher keine Datenpakete empfangen werden, den Ausgang 35 deaktivieren.

Die Steuereinheiten 31 der Busteilnehmer mit Ausnahme des Masters werden nur bei Tastendruck des Masters mit Energie versorgt.

Es ist auch denkbar, dass die Datenpfade der Buseinrichtung 11 drahtlos ausgebildet sind und zum Beispiel ein Bluetooth- oder DECT-Netz analog einer WLAN-Einrichtung bilden. Dann sind nur die Versorgungs- bzw. Leistungspfade in Form von zwei Leitungen zu den Busteilnehmern, insbesondere Antriebseinheiten und Verbraucher wie Lampen usw. notwendig. Die Bedienungseinheiten können dann mit Batterie oder Akku versorgt sein. Sie können auch zum Beispiel in einem Mobiltelefon integriert sein.

Im Falle des Betriebes mindestens eines Busteilnehmers 13...18 mit einem Akkumulator schaltet das Signal der Freigabeleitung den jeweiligen Busteilnehmer 13...18 oder zumindest die Steuereinheit 30 zwischen einem Betriebsmodus und einem stromsparenden Schlafmodus.

Ein Busteilnehmer kann auch ein Sensor sein.

## Patentansprüche

1. Elektrogeräteanordnung (10) für ein Möbel, mit einer Buseinrichtung (11) und Busteilnehmern (12...18), wobei die Buseinrichtung (11) zumindest zwei Steuerpfade, zwei Leistungspfade und mindestens einen Freigabepfad aufweist, und wobei ein Busteilnehmer (14) unter den Busteilnehmern (12...18) eine Bedienungseinheit mit einer Eingabeeinheit (34) mit einer Tastatur bildet, dass die Elektrogeräteanordnung (10) daran angepasst ist, dass eine Betätigung der Tastatur den mindestens einen Freigabepfad schaltet, dass der Busteilnehmer (14), der eine Bedienungseinheit bildet, daran angepasst ist den mindestens einen Freigabepfad mit Signalen zu beaufschlagen, wobei die Signale daran angepasst sind den mindestens einen Freigabepfad einer Auswahl von Busteilnehmern (12...18) oder einzelne Gruppen von Busteilnehmern (13 bis 18) in deren jeweiligen Betriebszustand derart zu ändern, dass durch das jeweilige Signal des mindestens einen Freigabepfades der Betriebszustand des jeweiligen Busteilnehmers (12 bis 18) zwischen einem aktiven und einem passiven und/oder einem energiesparenden Betriebszustand schaltbar ist
und dass die Buseinrichtung (11) mindestens einen Daisy-Chain-Pfad aufweist,
wobei der Freigabepfad und der Daisy-Chain-Pfad zu einem Pfad zusammengefügt sind, **dadurch gekennzeichnet, dass**
der gemeinsame Pfad ein erstes Signal als Verkettungssignal für die Daisy-Chain-Verkettung und mindestens ein weiteres Signal in Form eines Freigabesignals aufweist,
und wobei jeder Busteilnehmer (12...18) daran angepasst ist, das Verkettungssignal zwischen seinem Eingang und seinem Ausgang zu vergleichen und für den Fall, dass das Verkettungssignal nur an seinem Eingang anliegt, mit einem anderen Busteilnehmer Rücksprache zu halten und eine Adresse zugewiesen zu bekommen, und wobei der Busteilnehmer (12...18) daran angepasst ist, das Verkettungssignal an seinem Ausgang zu setzen, so dass das Verkettungssignal von einem weiteren Busteilnehmer an dessen Eingang abfragbar ist.

2. Elektrogeräteanordnung (10) nach Anspruch 1, **dadurch gekennzeichnet, dass** jeder Busteilnehmer (12...18) zumindest eine Steuereinheit (30), eine Basis-Steuereinheit (31), eine Speichereinheit (32) und eine Ausgabeeinheit (33) und/oder eine Eingabeeinheit (34) aufweist.

3. Elektrogeräteanordnung (10) nach Anspruch 2, **dadurch gekennzeichnet, dass** die Basis-Steuereinheit (31) und/oder die Steuereinheit (30) direkt mit der Buseinrichtung (11) verbunden ist.

4. Elektrogeräteanordnung (10) nach Anspruch 2 oder 3, **dadurch gekennzeichnet, dass** die Speichereinheit (32) zur Speicherung von vorher festlegbaren und veränderbaren Werten und/oder Programmen ausgebildet ist.

5. Elektrogeräteanordnung (10) nach einem der vorhergehenden Ansprüche, **dadurch gekennzeichnet, dass** die Freigabeleitung mit einem logischen, kodierten oder periodischen Signal oder einem bestimmten Potenzial zur Freigabe beaufschlagt ist.

6. Elektrogeräteanordnung (10) nach einem oder mehreren der vorhergehenden Ansprüche 1 bis 5, **dadurch gekennzeichnet, dass** durch das jeweilige Signal des mindestens einen Freigabepfades die Spannungsversorgung von Schaltorganen beispielsweise von Relais, Mikroprozessoren oder Steuereinheiten der einzelnen Busteilnehmer (12 bis 18) sicherstellbar ist.

7. Elektrogeräteanordnung (10) nach einem oder mehreren der vorhergehenden Ansprüche, **dadurch gekennzeichnet, dass** die Buseinrichtung (11) als eine RS 485 Schnittstelle mit mindestens einem zusätzlichen Freigabepfad und mit mindestens einem weiteren Pfad, vorzugsweise einem Pfad zur Daisy-Chain-Verkettung, ausgebildet ist.

8. Elektrogeräteanordnung (10) nach einem oder mehreren der vorhergehenden Ansprüche 1 bis 5, **dadurch gekennzeichnet, dass** die Buseinrichtung (11) als ein CAN-Bus mit mindestens einem zusätzlichen Freigabepfad ausgebildet ist.

9. Elektrogeräteanordnung (10) nach einem oder mehreren der vorhergehenden der Ansprüche 1 bis 5, **dadurch gekennzeichnet, dass** die Steuerpfade der Buseinrichtung (11) drahtlos ausgebildet sind.

10. Elektrogeräteanordnung (10) nach Anspruch 9, **dadurch gekennzeichnet, dass** die drahtlose Ausbildung der Steuerpfade eine WLAN-, DECT- oder Bluetootheinrichtung ist.

11. Elektrogeräteanordnung (10) nach Anspruch 9 oder 10, **dadurch gekennzeichnet, dass** der Freigabepfad Bestandteil der Steuerpfade der Buseinrichtung (11) ist.

12. Elektrogeräteanordnung (10) nach einem oder mehreren der vorhergehenden Ansprüche, **dadurch gekennzeichnet, dass** die Busteilnehmer (12...18) eine Daisy-Chain-Verkettung bilden.

13. Elektrogeräteanordnung (10) nach einem oder mehreren der vorhergehenden Ansprüche, **dadurch gekennzeichnet, dass** die Elektrogeräteanordnung (10) mittels Datenpakete (50) steuerbar ist, welche über die Buseinrichtung (11) übertragen werden, wobei die Datenpakete zumindest die Adresse eines Busteilnehmers (12...18) als ein Adressbyte (52), ein Befehlsbyte (54) und ein Prüfbyte (56) aufweisen.

14. Elektrogeräteanordnung (10) nach Anspruch 13, **dadurch gekennzeichnet, dass** die Datenpakete (50) weiterhin mindestens ein Datenbyte (55) aufweisen.

15. Elektrogeräteanordnung (10) nach einem oder mehreren der Ansprüche 1 bis14, **dadurch gekennzeichnet, dass** der Busteilnehmer (14), der als Bedienungseinheit einen Master bildet, in seiner Speichereinheit (32) einen dazu geeigneten Programmabschnitt aufweist, welcher die Steuersoftware des Masters bildet.

16. Elektrogeräteanordnung (10) nach einem oder mehreren der Ansprüche 1 bis 15, **dadurch gekennzeichnet, dass** die Steuereinheiten (30) aller oder einzelner Busteilnehmer (12...18) bei Nichtbenutzung der Elektrogeräteanordnung (10) elektrisch nicht versorgt oder nicht aktiv sind.

## Claims

1. Arrangement of electrical devices (10) for a piece of furniture, having a bus device (11) and bus subscribers (12...18), the bus device (11) having at least two control paths, two power paths and at least one enabling path, **characterized**
**in that** one bus subscriber (14) of the bus subscribers (12...18) forms an operating unit with an input unit (34) having a keyboard,
**in that** the arrangement of electrical devices (10) is adapted such that operation of the keyboard switches the at least one enabling path,
**in that** the bus subscriber (14) which forms an operating unit is adapted to apply signals to the at least one enabling path, the signals being adapted to change the respective operating state of a selection of bus subscribers (12...18) or individual groups of bus subscribers (13...18), by means of the at least one enabling path, in such a manner that the operating state of the respective bus subscriber (12...18) can be switched between an active operating state and a passive operating state and/or an energy-saving operating state by means of the respective signal from the at least one enabling path,
and that the bus device (11) comprises at least one daisy-chain-path, wherein the enabling path and the daisy-chain-path form a common path, **characterized in that**
the common path comprises a first signal as a linking signal for the daisy-chain-path and at least one further signal in the form of an enabling path,
and wherein each bus subscribers (12...18) is adapted to compare the linking signal between its input and its output and, in case the signal is applied only to the input, to confer with other bus subscribers and to have assigned an address,
and wherein the bus subscriber (12...18) is adapted to set the linking signal at its respective output, such that the linking signal can be queried at the input of another bus subscriber.

2. Arrangement of electrical devices (10) according to Claim 1, **characterized in that** each bus subscriber (12...18) has at least one control unit (30), a basic control unit (31), a memory unit (32) and an output unit (33) and/or an input unit (34).

3. Arrangement of electrical devices (10) according to Claim 2, **characterized in that** the basic control unit (31) and/or the control unit (30) is/are directly connected to the bus device (11).

4. Arrangement of electrical devices (10) according to Claim 2 or 3, **characterized in that** the memory unit (32) is designed to store predetermined and alterable values and/or programs.

5. Arrangement of electrical devices (10) according to one of the preceding claims, **characterized in that** a logic, coded or periodic signal or a particular potential for enabling is applied to the enabling line.

6. Arrangement of electrical devices (10) according to one or more of the preceding Claims 1 to 5, **characterized in that** the voltage supply for switching elements, for example for relays, microprocessors or control units, of the individual bus subscribers (12 to 18) can be ensured by means of the respective signal from the at least one enabling path.

7. Arrangement of electrical devices (10) according to one or more of the preceding claims, **characterized in that** the bus device (11) is in the form of an RS 485 interface having at least one additional enabling path and having at least one further path, preferably a daisy-chaining path.

8. Arrangement of electrical devices (10) according to one or more of the preceding Claims 1 to 5, **characterized in that** the bus device (11) is in the form of a CAN bus with at least one additional enabling path.

9. Arrangement of electrical devices (10) according to one or more of the preceding Claims 1 to 5, **characterized in that** the control paths of the bus device (11) are wireless.

10. Arrangement of electrical devices (10) according to Claim 9, **characterized in that** the wireless design of the control paths is a WLAN, DECT or Bluetooth device.

11. Arrangement of electrical devices (10) according to Claim 9 or 10, **characterized in that** the enabling path is part of the control paths of the bus device (11).

12. Arrangement of electrical devices (10) according to one or more of the preceding claims, **characterized in that** the bus subscribers (12...18) form a daisy chain.

13. Arrangement of electrical devices (10) according to one or more of the preceding claims, **characterized in that** the arrangement of electrical devices (10) can be controlled using data packets (50) which are transmitted via the bus device (11), the data packets having at least the address of a bus subscriber (12...18) as an address byte (52), a command byte (54) and a check byte (56).

14. Arrangement of electrical devices (10) according to Claim 13, **characterized in that** the data packets (50) also have at least one data byte (55).

15. Arrangement of electrical devices (10) according to one or more of Claims 1 to 14, **characterized in that** the bus subscriber (14) which, as an operating unit, forms a master has a program section which is suitable for this purpose and forms the control software of the master in its memory unit (32).

16. Arrangement of electrical devices (10) according to one or more of Claims 1 to 15, **characterized in that** the control units (30) of all or individual bus subscribers (12...18) are not supplied with electricity or are not active when the arrangement of electrical devices (10) is not used.

## Revendications

1. Agencement d'appareils électriques (10) pour un meuble, avec un dispositif de bus (11) et des abonnés de bus (12...18), le dispositif de bus (11) comprenant au moins deux chemins de commande, deux chemins d'exploitation et au moins un chemin de validation, **caractérisé en ce que**
un abonné de bus (14) parmi les abonnés de bus (12...18) forme une unité de commande avec une unité de saisie (34) avec un clavier,
l'agencement d'appareils électriques (10) y étant adapté,
un actionnement du clavier assurant la commutation de ce ou ces chemin(s) de validation,
l'abonné de bus (14) qui forme une unité de commande étant adapté pour alimenter avec des signaux ce ou ces chemin(s) de validation, les signaux étant adaptés pour modifier grâce à ce ou ces chemin(s) de validation une sélection d'abonnés de bus (12 à 18) ou des groupes individuels d'abonnés de bus (13 à 18) concernant l'état de fonctionnement respectif de ceux-ci **en ce que** grâce au signal respectif de ce ou ces chemin(s) de validation, l'état de fonctionnement de l'abonné de bus (12 à 18) respectif peut être commuté entre un état de commutation actif et passif et/ou un état de commutation à économie d'énergie
et **en ce que** le dispositif de bus (11) comprend au moins un chaînage Daisy-Chain, dans lequel le chemin de validation et le chaînage Daisy-Chain forment un chemin commun, **caractérisé en ce que**
le chemin commun comprend un premier signal en tant que signal de liaison pour le chaînage de Daisy-Chain et au moins un autre signal sous la forme d'un chemin de validation,
et dans lequel chaque abonné de bus (12 ... 18) est adapté pour comparer le signal de liaison entre son entrée et sa sortie et, dans le cas où le signal est appliqué uniquement à l'entrée, pour conférer avec d'autres abonnés de bus et attribuer une adresse,
et dans lequel l'abonné de bus (12 ... 18) est adapté pour établir le signal de liaison sur sa sortie respective, de sorte que le signal de liaison peut être interrogé à l'entrée d'un autre abonné de bus.

2. Agencement d'appareils électriques (10) selon la revendication 1, **caractérisé en ce que** chaque abonné de bus (12...18) présente au moins une unité de commande (30), une unité de commande de base (31), une unité de mémoire (32) et une unité de sortie (33) et/ou une unité d'entrée (34).

3. Agencement d'appareils électriques (10) selon la revendication 2, **caractérisé en ce que** l'unité de commande de base (31) et/ou l'unité de commande (30) est/sont directement reliée(s) au dispositif de bus (11).

4. Agencement d'appareils électriques (10) selon la revendication 2 ou 3, **caractérisé en ce que** l'unité de mémoire (32) est réalisée pour la mise en mémoire de valeurs et/ou programmes pouvant être prédéfinis à l'avance et modifiés.

5. Agencement d'appareils électriques (10) selon l'une des revendications précédentes, **caractérisé en ce que** la ligne de validation est alimentée par un signal logique, codé ou périodique ou par un potentiel défini pour la validation.

6. Agencement d'appareils électriques (10) selon l'une ou plusieurs des revendications 1 à 5 précédentes, **caractérisé en ce que** grâce au signal respectif de ce ou ces chemin(s) de validation, il est possible de sécuriser l'alimentation en tension d'organes de commutation, par exemple de relais, de microprocesseurs ou d'unités de commande des abonnés de bus (12 à 18) individuels.

7. Agencement d'appareils électriques (10) selon l'une ou plusieurs des revendications précédentes, **caractérisé en ce que** le dispositif de bus (11) est réalisé en tant qu'interface RS 485 avec au moins un chemin de validation supplémentaire et avec au moins un autre chemin, de préférence un chemin pour le chaînage Daisy-Chain.

8. Agencement d'appareils électriques (10) selon l'une ou plusieurs des revendications 1 à 5 précédentes, **caractérisé en ce que** le dispositif de bus (11) est réalisé en tant que bus CAN avec au moins un chemin de validation supplémentaire.

9. Agencement d'appareils électriques (10) selon l'une ou plusieurs des revendications 1 à 5 précédentes, **caractérisé en ce que** les chemins de commande du dispositif de bus (11) sont réalisés sans fil.

10. Agencement d'appareils électriques (10) selon la revendication 9, **caractérisé en ce que** la réalisation sans fil des chemins de commande est un dispositif WLAN, DECT ou un dispositif Bluetooth.

11. Agencement d'appareils électriques (10) selon la revendication 9 ou 10, **caractérisé en ce que** le chemin de validation est un élément constitutif des chemins de commande du dispositif de bus (11).

12. Agencement d'appareils électriques (10) selon l'une ou plusieurs des revendications précédentes, **caractérisé en ce que** les abonnés de bus (12....18) forment un chaînage Daisy-Chain.

13. Agencement d'appareils électriques (10) selon l'une ou plusieurs des revendications précédentes, **caractérisé en ce que** l'agencement d'appareils électriques (10) peut être commandé à l'aide de paquets de données, lesquels sont transmis par l'intermédiaire du dispositif de bus (11), les paquets de données présentant au moins l'adresse d'un abonné de bus (12...18) en tant qu'octet d'adresse (52), octet d'instruction (54) et octet de vérification (56).

14. Agencement d'appareils électriques (10) selon la revendication 13, **caractérisé en ce que** les paquets de données (50) présentent en outre au moins un octet de données (55).

15. Agencement d'appareils électriques (10) selon l'une ou plusieurs des revendications 1 à 14, **caractérisé en ce que** l'abonné de bus (14), lequel forme un maître en tant qu'unité de commande, présente dans son unité de mémoire (32) un morceau de programme qui convient pour cela, lequel forme le logiciel de commande du maître.

16. Agencement d'appareils électriques (10) selon l'une ou plusieurs des revendications 1 à 15, **caractérisé en ce que** les unités de commande (30) de tous les abonnés de bus (12...18) ou d'abonnés de bus individuels ne sont pas alimentées électriquement ou ne sont pas actives en cas de non utilisation de l'agencement d'appareils électriques (10).
